# EUROPEAN PATENT SPECIFICATION

(11) **EP 3 893 302 B1**
(45) Date of publication and mention of the grant of the patent: **13.12.2023**
(21) Application number: 21167122.7
(22) Date of filing: 07.04.2021
(51) Int. Cl.: H01M 8/0226, H01M 8/0243, H01M 8/12, H01M 8/0213, H01M 8/0234

(54) **SOLID OXIDE FUEL CELL INTERCONNECT**
INTERKONNEKTOR EINER FESTOXID-BRENNSTOFFZELLE
INTERCONNECTEUR DE PILE À COMBUSTIBLE À OXYDE SOLIDE

(30) Priority: 09.04.2020 US 202063007458 P
(43) Date of publication of application: 13.10.2021
(73) Proprietor: Hamilton Sundstrand Corporation, Charlotte, NC 28217-4578 (US)
(72) Inventor: VOLETI, Sreenivasa R, Farmington, 06032 (US); SHEEDY, Paul, Bolton, 06043 (US); HAWKES, Justin R., Marlborough, 06447 (US); EMERSON, Sean C., Broad Brook, 06016 (US); ZHU, Tianli, Glastonbury, 06033 (US)
(74) Representative: Dehns

(56) References cited:
- EP-A1- 2 763 223
- US-A1- 2007 037 031
- US-A1- 2008 090 129
- US-A1- 2013 202 981
- US-A1- 2019 372 133

## Description

### BACKGROUND

Exemplary embodiments pertain to the art of solid oxide fuel cells, in particular to interconnects used in solid oxide fuel cells.

Electrochemical devices such as fuel cells convert chemical energy into electrical energy. Conversion involves controlled oxidation of a fuel such as hydrogen, a hydrocarbon, or reformed hydrocarbon. Fuel cell assemblies can include one or, preferably, a plurality of stacked cells. A fuel cell has an anode and a cathode separated by an electrolyte. The fuel cell can also comprise one or more interconnects.

Interconnects are usually made of metals such as stainless steel which can make the fuel cell heavier than desired in some applications. Lighter weight interconnect materials are desired. US 2019/372133 and US 2008/090129 relate to interconnects for fuel cells.

### BRIEF DESCRIPTION

Disclosed is a solid oxide fuel cell including an electrode-electrolyte assembly and an interconnect in communication with the electrode-electrolyte assembly, wherein the interconnect has a porosity gradient.

In addition to one or more of the features described above, or as an alternative to any of the foregoing embodiments, the interconnect has less porosity in a central region.

In addition to one or more of the features described above, or as an alternative to any of the foregoing embodiments, the interconnect has an interior area which is impermeable to gas or fluid.

In addition to one or more of the features described above, or as an alternative to any of the foregoing embodiments, the interconnect includes a carbon matrix composite.

In addition to one or more of the features described above, or as an alternative to any of the foregoing embodiments, the carbon matrix composite includes carbon fibers, metal fibers, ceramic fibers, or a combination thereof. The carbon matrix composite may further include metal particles.

In addition to one or more of the features described above, or as an alternative to any of the foregoing embodiments, the carbon matrix composite includes a fiber preform and a carbon matrix.

In addition to one or more of the features described above, or as an alternative to any of the foregoing embodiments, the carbon matrix composite includes discontinuous fibers dispersed in a carbon matrix.

In addition to one or more of the features described above, or as an alternative to any of the foregoing embodiments, the carbon matrix composite has a density less than or equal to 3.4 grams per cubic centimeter.

Also disclosed is an interconnect for a solid oxide fuel cell including a porosity gradient.

In addition to one or more of the features described above, or as an alternative to any of the foregoing embodiments, the interconnect has less porosity in a central region.

In addition to one or more of the features described above, or as an alternative to any of the foregoing embodiments, the interconnect has an interior area which is impermeable to gas or fluid.

In addition to one or more of the features described above, or as an alternative to any of the foregoing embodiments, the interconnect includes a carbon matrix composite.

In addition to one or more of the features described above, or as an alternative to any of the foregoing embodiments, the carbon matrix composite includes carbon fibers, metal fibers, ceramic fibers, or a combination thereof. The carbon matrix composite may further include metal particles.

In addition to one or more of the features described above, or as an alternative to any of the foregoing embodiments, the carbon matrix composite comprises a fiber preform and a carbon matrix.

In addition to one or more of the features described above, or as an alternative to any of the foregoing embodiments, the carbon matrix composite comprises discontinuous fibers dispersed in a carbon matrix.

In addition to one or more of the features described above, or as an alternative to any of the foregoing embodiments, the carbon matrix composite has a porosity gradient.

In addition to one or more of the features described above, or as an alternative to any of the foregoing embodiments, the carbon matrix composite has a density less than or equal to 3.4 grams per cubic centimeter.

In addition to one or more of the features described above, or as an alternative to any of the foregoing embodiments, the carbon matrix composite is thermo-mechanically stable at temperatures greater than 400°C for greater than 100 hours.

In addition to one or more of the features described above, or as an alternative to any of the foregoing embodiments, the carbon matrix composite has an electrical resistivity less than or equal to 0.1 milliohm-cm at 20°C.

### BRIEF DESCRIPTION OF THE DRAWINGS

The following descriptions should not be considered limiting in any way.

The Figure is a schematic representation of a stack of solid oxide fuel cells.

### DETAILED DESCRIPTION

A detailed description of one or more embodiments of the disclosed apparatus and method are presented herein by way of exemplification and not limitation with reference to the Figure.

As shown in the Figure, a fuel cell stack 1 includes a plurality of fuel cells 10. One or more fuel cells can include an electrode-electrolyte assembly (EEA) 12 and an interconnect 14 typically in communication with EEA 12, electrically, thermal, and/or structurally. EEA 12 typically includes an electrolyte 16 disposed to be in electrical and ionic communication with an anode 18 and a cathode 20.

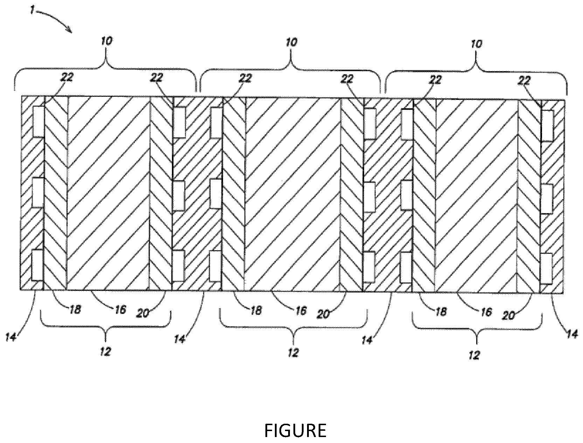

Interconnect 14 typically includes features such as channels 22 that facilitate or direct the fuel or oxidizer for reaction in EEA 12. Interconnect 14 can also serve as a current collector during operation of electrochemical device 10 to provide or direct generated electrical energy to a load (not shown). In some cases, interconnect 14 can have a coating (not shown), disposed on a surface adjacent to an interface 22 with EEA 12. A sublayer or interlayer (not shown) can also be utilized between the coating and a surface of the interconnect. While Figure 1 shows a generalized geometry for an interconnect this should not be construed as limiting and the interconnect described herein may have any geometry suitable for use in a solid oxide fuel cell.

The interconnect includes a carbon matrix composite. The carbon matrix composite includes a carbon matrix and a reinforcing material. Exemplary reinforcing materials include carbon fibers, metal fibers such as tungsten fibers, ceramic fibers, and combinations thereof. Exemplary ceramic fibers include silicon carbide fibers, alumina fibers, boron nitride fibers and combinations thereof. The fibers may optionally be combined with particulate materials such as metal particles. Exemplary metal particles include transition metals such as titanium, chromium, iron, cobalt, nickel, copper, as well as corrosion resistant alloys such as stainless steel, iron based alloys, nickel based alloys, and cobalt based alloys. The metal particles may be a mixture of any of the foregoing. The reinforcing material may be continuous fibers or discontinuous (chopped) fibers. The continuous fibers may be unidirectional, woven, or non-woven in a fabric. The discontinuous (chopped) fibers may be dispersed, aligned or randomly oriented, in a woven or non-woven fabric. The reinforcing material may be a preform. The fiber preform may include a woven preform or a non-woven preform. The fibers may have an average diameter of 5 to 20 micrometers.

The carbon matrix composite may have a density less than or equal to 3.4 grams per cubic centimeter. The carbon matrix composite is thermo-mechanically stable throughout the service life of the interconnect at operating temperatures greater than 400° C, e.g., at least about 100 hours, in some cases at least about 5,000, in other cases at least about 40,000 hours, relative to its configuration at room temperature or at initial startup or when initially placed in service. The carbon matrix composite may also be chemically stable and resistant to corrosion in its operating environment.

The carbon matrix composite may have an electrically resistivity of less than 0.1 milliohm-cm, or, less than 0.05 milliohm-cm, or less than 0.025 milliohm-cm, at a temperature of 20° C.

The carbon matrix composite can vary with respect to its porosity throughout the thickness of the interconnect. For example, the porosity can vary as a function of the distance from the interconnect surface. Thus, the interconnect can have less porosity toward the center of the interconnect. Likewise, the interconnect can have a varying porosity with respect to distance from its outer edges to its core. For example, the interconnect can have less porosity toward the interconnect center. The variation can be continuous providing a gradual change or it can be discrete providing step-wise or incremental changes. The porosity may vary from greater than or equal to 30%, or greater than or equal to 40%, or greater than or equal to 50% at the surface and outer edges to less than 10% at the core. It is further contemplated that higher porosity may be incorporated in channel 22 locations - allowing the interconnect to have a continuous structure.

The carbon matrix composite can be prepared by any known technique. For example, the carbon matrix composite can be prepared by densification of a porous preform, which may include one or more infiltrations of the porous material preform using a liquid or vapor component. The liquid component may comprise a carbon-bearing resin, or a particle-filled aqueous or non-aqueous slurry, which after a sintering, hot pressing, or other high temperature treatment provides the matrix of the carbon matrix composite. In some embodiments, chemical vapor infiltration of the preform is used for providing the matrix in the carbon matrix composite. When a porosity gradient is desired chemical vapor infiltration is used and the pressure and/or flow of reactants is controlled from different sides of the preform to result in an area of higher density and less porosity. In some embodiments the interconnect has areas which are impermeable to gas or fluid flow.

The interconnect can have one or more coatings or layers on at least a portion of one or more surfaces thereof. Thus, for example, the interconnect can include a carbon matrix composite having a coating on at least a portion of its surface. The coating can comprise any suitable material that can render it substantially nonporous or impermeable, electrically conductive, and, preferably, can provide oxidation or degradation protection. Preferably, the coating is impermeable to oxidizing agents and/or reducing agents at the operating or service temperature of the interconnect. The coating can be selected to provide an area specific resistance between the electrode-electrolyte assembly and the coated interconnect of less than about 0.1 ohm-cm². Thus, for example, the coating can be one or more materials or compounds having a conductivity of at least about 1 S/cm; a CTE that is within about 35%, preferably within about 10%, more preferably within about 5%, of the CTE of the material of the interconnect; and/or a thermal conductivity of at least about 5 W/m·K, preferably at least about 10 W/m·K, more preferably at least about 100 W/m·K. Non-limiting examples of materials or compounds that can comprise the coating include, but are not limited to, conductive oxides, chromites, nickel oxide, doped or undoped lanthanum chromite, manganese chromite, yttria, lanthanum strontium manganite (LSM), lanthanum strontium chromite, noble metals such as platinum, gold, and silver, as well as nickel, and copper, doped or undoped electrically conductive perovskites, manganese chromite, and lanthanum strontium cobalt oxide, zirconium diboride, titanium silicon carbide, as well as mixtures or combinations thereof. Typically, the coating is applied to be as thin as possible while maintaining full density and provide the desired protective capacity and/or reduce any adverse or undesirable properties such as resistivity. For example, the coating can be less than about 50 µm thick, in some cases less than about 25 µm thick, in other cases less than about 10 µm thick, and in still other cases less than about 5 µm thick. Coating materials are commercially available from, for example, NexTech Materials, Ltd., Lewis Center, Ohio, Praxair Specialty Ceramics, Woodinville, Wash., and Trans-Tech, Inc., Adamstown, Md.

The coatings can be applied by any suitable technique including, but not limited to, vapor deposition (including atomic layer deposition and chemical vapor deposition), slurry or solution-based methods (including screen printing and fluidized bed immersion), spray coating or dip coating, thermal spray coating, , and/or physical vapor deposition methods such as magnetron sputtering.

A sublayer may be disposed between the coating and the surface of the interconnect material. The sublayer can be disposed on at least partially, preferably throughout, the interface between the coating and any contacted surface of the interconnect material. In some cases, the sublayer can serve as an additional barrier layer between the carbon matrix composite and the environment of the solid oxide fuel cell. Preferably, the sublayer can isolate, or otherwise interfere with any unwanted or undesirable reactions between the carbon matrix composite and the coating. The present invention also contemplates the use of one or more sublayers disposed on one or more portions or regions between the coating the interconnect material surface. Thus, one or more regions can have or not have any sublayer or one or more regions can have differing sublayer compositions. The sublayer can have any desired thickness that provides electrical conductivity and/or thermal conductivity. Typically, the sublayer is applied to be as thin as possible while maintaining full density and provide the desired protective capacity and/or reduce any adverse or undesirable properties such as resistivity. For example, the sublayer can be less than about 1 µm thick, in some cases less than about 0.5 µm thick, and in other cases less than about 0.1 µm thick. The sublayer can be applied by any suitable technique including, but not limited to, vapor deposition (including atomic layer deposition and chemical vapor deposition), slurry or solution-based methods (including screen printing and fluidized bed immersion), spray coating or dip coating, thermal spray coating, and/or physical vapor deposition methods such as magnetron sputtering. The sublayer can comprise, but is not limited to, titanium nitride, titanium aluminum nitride, titanium silicon carbide, or mixtures thereof.

The carbon matrix composite can have one or more interfacial agents that can promote or serve to form a bridge between the reinforcing component and the carbon matrix. The interfacial agent can be deposited as an interfacial layer that facilitates adherence of the reinforcing component to the matrix.

Any EEA can be utilized. For example, the EEA can comprise an anode, an electrolyte, and a cathode. The anode can comprise any material that supports or promote fuel oxidation such as a cermet, having predominantly, continuous ceramic phase with a discontinuous metal phase such as Ni/YSZ (nickel/yttria stabilized zirconia) or Ni/BYZ (nickel/yttrium doped barium zirconate), typically having a porosity of 20-40%. The electrolyte can comprise an oxygen-conductive ceramic such as dense YSZ or a proton conductive ceramic such as BYZ, typically having a porosity of less than about 1%. The cathode can comprise any material that catalyzes or promotes oxidant reduction such as lanthanum strontium manganite, typically having a porosity of 20-40%. Electrodes-electrolyte assemblies are commercially available from for example, Innovative Dutch Electro Ceramics (InDEC B.V.), the Netherlands and NexTech Materials, Ltd., Lewis Center, Ohio.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof. It is further contemplated that the terms "comprises" and/or "comprising" includes embodiments in which "comprises" and/or "comprising" can be replaced with "consists" and/or "consisting of'.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A solid oxide fuel cell comprising an electrode-electrolyte assembly (12) and an interconnect (14) in communication with the electrode-electrolyte assembly, wherein the interconnect has an inner core and an outer surface and has a porosity gradient that increases from the inner core to the outer surface.

2. The solid oxide fuel cell of claim 1, wherein the inner core is impermeable to gas or fluid.

3. The solid oxide fuel cell of claim 1, wherein the interconnect (14) comprises a carbon matrix composite.

4. The solid oxide fuel cell of claim 3, wherein the carbon matrix composite comprises carbon fibers, metal fibers, ceramic fibers, or a combination thereof.

5. The solid oxide fuel cell of claim 3, wherein the carbon matrix composite further comprises metal particles.

6. The solid oxide fuel cell of claim 3, wherein the carbon matrix composite comprises a fiber preform and a carbon matrix.

7. The solid oxide fuel cell of claim 3, wherein the carbon matrix composite comprises discontinuous carbon fibers dispersed in a carbon matrix.

8. The solid oxide fuel cell of claim 3, wherein the carbon matrix composite has a density less than or equal to 3.4 grams per cubic centimeter.

9. An interconnect for a solid oxide fuel cell having an inner core and an outer surface and a porosity gradient that increases from the inner core to the outer surface.

10. The interconnect of claim 9, wherein the inner core is impermeable to gas or fluid.

11. The interconnect of claim 9, wherein the interconnect comprises a carbon matrix composite.

12. The interconnect of claim 11, wherein the carbon matrix composite comprises carbon fibers, metal fibers, ceramic fibers, or a combination thereof.

13. The interconnect of claim 11, wherein the carbon matrix composite further comprises metal particles; or
wherein the carbon matrix composite comprises a fiber preform and a carbon matrix; or
wherein the carbon matrix composite comprises discontinuous fiber dispersed in a carbon matrix; or
wherein the carbon matrix composite is thermo-mechanically stable at temperatures of greater than 400°C for greater than 100 hours; or
wherein the carbon matrix composite has an electrical resistivity less than or equal to 0.1 milliohm-cm at 20°C.

## Patentansprüche

1. Festoxid-Brennstoffzelle, umfassend eine Elektroden-Elektrolyt-Baugruppe (12) und einen Interkonnektor (14), der mit der Elektroden-Elektrolyt-Baugruppe in Verbindung steht, wobei der Interkonnektor einen inneren Kern und eine äußere Fläche aufweist und einen Porositätsgradienten aufweist, der von dem inneren Kern zu der äußeren Fläche zunimmt.

2. Festoxid-Brennstoffzelle nach Anspruch 1, wobei der innere Kern für Gas oder Fluid undurchlässig ist.

3. Festoxid-Brennstoffzelle nach Anspruch 1, wobei der Interkonnektor (14) einen Kohlenstoffmatrix-Verbundwerkstoff umfasst.

4. Festoxid-Brennstoffzelle nach Anspruch 3, wobei der Kohlenstoffmatrix-Verbundstoff Kohlenstofffasern, Metallfasern, Keramikfasern oder eine Kombination davon umfasst.

5. Festoxid-Brennstoffzelle nach Anspruch 3, wobei der Kohlenstoffmatrix-Verbundwerkstoff ferner Metallpartikel umfasst.

6. Festoxid-Brennstoffzelle nach Anspruch 3, wobei der Kohlenstoffmatrix-Verbundwerkstoff eine Faservorform und eine Kohlenstoffmatrix umfasst.

7. Festoxid-Brennstoffzelle nach Anspruch 3, wobei der Kohlenstoffmatrix-Verbundwerkstoff diskontinuierliche Kohlenstofffasern umfasst, die in einer Kohlenstoffmatrix dispergiert sind.

8. Festoxid-Brennstoffzelle nach Anspruch 3, wobei der Kohlenstoffmatrix-Verbundwerkstoff eine Dichte von weniger als oder gleich 3,4 Gramm pro Kubikzentimetern aufweist.

9. Interkonnektor für eine Festoxid-Brennstoffzelle mit einem inneren Kern und einer äußeren Fläche und einem Porositätsgradienten, der von dem inneren Kern zu der äußeren Fläche zunimmt.

10. Interkonnektor nach Anspruch 9, wobei der innere Kern für Gas oder Fluid undurchlässig ist.

11. Interkonnektor nach Anspruch 9, wobei der Interkonnektor einen Kohlenstoffmatrix-Verbundstoff umfasst.

12. Interkonnektor nach Anspruch 11, wobei der Kohlenstoffmatrix-Verbundwerkstoff Kohlenstofffasern, Metallfasern, Keramikfasern oder eine Kombination davon umfasst.

13. Interkonnektor nach Anspruch 11, wobei der Kohlenstoffmatrix-Verbundwerkstoff ferner Metallpartikel umfasst; oder
wobei der Kohlenstoffmatrix-Verbundwerkstoff eine Faservorform und eine Kohlenstoffmatrix umfasst; oder
wobei der Kohlenstoffmatrix-Verbundwerkstoff diskontinuierliche Fasern umfasst, die in einer Kohlenstoffmatrix dispergiert sind; oder
wobei der Kohlenstoffmatrix-Verbundwerkstoff bei Temperaturen von mehr als 400 °C für mehr als 100 Stunden thermomechanisch stabil ist; oder
wobei der Kohlenstoffmatrix-Verbundwerkstoff einen elektrischen Widerstand von weniger als oder gleich 0,1 Milliohm-cm bei 20 °C aufweist.

## Revendications

1. Pile à combustible à oxyde solide comprenant un ensemble électrode-électrolyte (12) et un interconnecteur (14) en contact avec l'ensemble électrode-électrolyte, dans laquelle l'interconnecteur présente un noyau interne et une surface externe et présente un gradient de porosité qui augmente depuis le noyau interne vers la surface externe.

2. Pile à combustible à oxyde solide selon la revendication 1, dans laquelle le noyau interne est imperméable au gaz ou au fluide.

3. Pile à combustible à oxyde solide selon la revendication 1, dans laquelle l'interconnecteur (14) comprend un composite à matrice de carbone.

4. Pile à combustible à oxyde solide selon la revendication 3, dans laquelle le composite à matrice de carbone comprend des fibres de carbone, des fibres métalliques, des fibres céramiques ou une combinaison de celles-ci.

5. Pile à combustible à oxyde solide selon la revendication 3, dans laquelle le composite à matrice de carbone comprend en outre des particules métalliques.

6. Pile à combustible à oxyde solide selon la revendication 3, dans laquelle le composite à matrice de carbone comprend une préforme fibreuse et une matrice de carbone.

7. Pile à combustible à oxyde solide selon la revendication 3, dans laquelle le composite à matrice de carbone comprend des fibres de carbone discontinues dispersées dans une matrice de carbone.

8. Pile à combustible à oxyde solide selon la revendication 3, dans laquelle le composite à matrice de carbone présente une masse volumique inférieure ou égale à 3,4 grammes par centimètre cube.

9. Interconnecteur pour une pile à combustible à oxyde solide présentant un noyau interne et une surface externe et un gradient de porosité qui augmente depuis le noyau interne vers la surface externe.

10. Interconnecteur selon la revendication 9, dans lequel le noyau interne est imperméable au gaz ou au fluide.

11. Interconnecteur selon la revendication 9, dans lequel l'interconnecteur comprend un composite à matrice de carbone.

12. Interconnecteur selon la revendication 11, dans lequel le composite à matrice de carbone comprend des fibres de carbone, des fibres métalliques, des fibres céramiques ou une combinaison de celles-ci.

13. Interconnecteur selon la revendication 11, dans lequel le composite à matrice de carbone comprend en outre des particules métalliques ; ou
dans lequel le composite à matrice de carbone comprend une préforme fibreuse et une matrice de carbone ; ou
dans lequel le composite à matrice de carbone comprend des fibres discontinues dispersées dans une matrice de carbone ; ou
dans lequel le composite à matrice de carbone est thermomécaniquement stable à des températures supérieures à 400 °C pendant plus de 100 heures ; ou
dans lequel le composite à matrice de carbone présente une résistivité électrique inférieure ou égale à 0,1 milliohm-cm à 20 °C.
